# EUROPÄISCHE PATENTSCHRIFT

(11) **EP 2 363 359 B1**
(45) Veröffentlichungstag und Bekanntmachung des Hinweises auf die Patenterteilung: **16.07.2014**
(21) Anmeldenummer: 11153790.8
(22) Anmeldetag: 09.02.2011
(51) Int. Cl.: B65G 21/20

(54) **Fördereinrichtung mit einem Geländer**
Conveyor with a guide
Convoyeur avec un guide

(30) Priorität: 01.03.2010 DE 102010000596
(43) Veröffentlichungstag der Anmeldung: 07.09.2011
(73) Patentinhaber: Krones AG, 93073 Neutraubling (DE)
(72) Erfinder: Seger, Martin, 92318, Neumarkt i. d. Opf. (DE); Hüttner, Johann, 84066, Mallersdorf (DE)
(74) Vertreter: Reichert, Sabine

(56) Entgegenhaltungen:
- WO-A1-02/04324
- DE-A1- 2 504 264
- DE-A1- 3 444 462
- DE-A1-102007 020 698
- KR-A- 20020 053 932
- US-B1- 6 588 578

## Beschreibung

Die vorliegende Erfindung betrifft eine Fördereinrichtung zum Fördern von Gegenständen, insbesondere zum Fördern von Getränkebehältern, gemäß dem Oberbegriff des Anspruchs 1.

Die deutsche Offenlegungsschrift DE 10 2007 020 698 A1 offenbart eine Fördereinrichtung zum Fördern von Gegenständen nach dem Oberbegriff des Anspruchs 1 der vorliegenden Erfindung.

Fördereinrichtungen zum Fördern von Gegenständen werden beispielsweise in Anlagen zum Abfüllen von Getränken eingesetzt. Dabei wird eine Vielzahl von Gegenständen, in diesem Falle also eine Vielzahl von Getränkebehältern, auf einem Förderband zu einer Abfüllstation gefördert. Der Förderweg wird dabei üblicherweise durch ein Geländer begrenzt, so dass ein Herabfallen der geförderten Gegenstände verhindert wird. Da der Gesamtprozess zur Abfüllung hoch automatisiert ist, ist es erforderlich, entlang des Förderwegs unterschiedliche Sensoren, beispielsweise die aus der DE 197 04 406 C1 bekannten Lichtschranken, vorzusehen. Weiterhin werden auch an den erforderlichen Stellen des Förderwegs Stauschalter vorgesehen. Die Stauschalter geben ein Signal, wenn durch einen Stau der geförderten Gegenstände der Staudruck eine bestimmte Größe übersteigt. Zum Messen des Staudrucks weist der Stauschalter einen beweglichen Bügel auf, der bei zunehmendem Staudruck bewegt wird und ein Signal, beispielsweise ein induktives Signal, erzeugt, das zur Steuerung der Anlage verwendet werden kann. Ein derartiger Stauschalter ist beispielsweise aus der DE 42 32 413 bekannt.

Derartige Fördereinrichtungen sind auch in anderen technischen Gebieten zum Fördern von Gegenständen bekannt, die wahlweise bereits eine Sensoreinrichtung, wie beispielsweise in der koreanischen Offenlegungsschrift KR 2002 0053932 A offenbart, oder einen Stauschalter aufweisen. Dies ist beispielsweise in der deutschen Offenlegungsschrift DE 25 04 264 A1 beschrieben.

Zur Befestigung derartiger Stauschalter am Geländer werden gegenwärtig Löcher in das Edelstahlprofil des Geländers gebohrt und verschraubt oder Gewindebolzen an das Geländer geschossen. Beim Aufbau der Anlage ist dies allerdings mit großem Aufwand verbunden. Zudem ist damit eine Veränderung der Position der Stauschalter nur schwer möglich, wobei wiederum weitere Löcher in das Edelstahlprofil eingebracht werden müssen.

Der Erfindung liegt die technische Aufgabe zugrunde, eine Fördereinrichtung zum Fördern von Gegenständen, insbesondere zum Fördern von Getränkebehältern, mit einem Förderband, einem Geländer und einer Sensoreinrichtung vorzuschlagen, bei der die Sensoreinrichtung einfach angebracht und auch nach dem Anbringen einfach neu positioniert werden kann, wobei zugleich mittels der Sensoreinrichtung ein Stau von Gegenständen auf dem Förderband erfassbar ist.

Diese Aufgabe wird durch die Fördereinrichtung des Anspruchs 1 gelöst.

In einer ersten erfindungsgemäßen Ausführungsform wird die Sensoreinrichtung an dem Geländer der Fördereinrichtung verschiebbar angebracht. Dabei kann die Befestigung der Sensoreinrichtung mit einem Permanentmagneten erfolgen, so dass die Sensoreinrichtung lösbar am Geländer angebracht ist.

Zur Verstärkung der Wirkung des Permanentmagneten können im Bereich der Sensoreinrichtung zusätzlich zu dem Permanentmagneten ein oder mehrere ferromagnetische Streifen in eine Führungsnut hinter den Profilstreifen-Enden eingefügt werden, die das Geländer umgreifen.

In einer weiteren Ausführungsform der Erfindung kann die Sensoreinrichtung mit einer an dem Geländer geklemmten Lasche an dem Geländer befestigt werden. Auch diese Art der Befestigung gewährleistet, dass die Sensoreinrichtung lösbar oder verschiebbar bleibt.

Hierbei kann die Lasche gestuft ausgeführt werden, wobei die Lasche dann so angeordnet wird, dass sie mit ihren gestuften Teilen unter den Profilstreifen-Enden angeordnet ist, die an dem Geländer angebrachten sind. Weiterhin kann die Sensoreinrichtung eine Halterung aufweisen, die dann mit der Lasche gegebenenfalls über ein an der Halterung angeordnetes Verbindungselement verschraubt wird. Damit wird eine gute Klemmung der Sensoreinrichtung am Geländer erreicht, wobei gleichzeitig eine Verschiebbarkeit der Sensoreinrichtung gewährleistet bleibt, wenn die Verschraubung gelöst wird.

Bevorzugt wird die Sensoreinrichtung als Stauschalter mit einer Wippe ausgeführt. Die Halterung des Stauschalters kann in einer weiteren Ausführungsform der Erfindung formschlüssig in einer Führungsnut des Geländers angeordnet werden. Damit kann eine genaue Ausrichtung der Sensoreinrichtung in horizontaler Richtung erreicht werden. Die Führungsnut ist im Wesentlichen durch die auf der dem Förderband abgewandten Seite des Geländers vorgesehenen. Die Führungsnut ist durch zwei voneinander beabstandete Profilstreifen-Enden ausgebildet.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
- Figur 1: zeigt eine Prinzipansicht auf eine Fördereinrichtung mit Stauschalter.
- Figur 2: zeigt einen Stauschalter in perspektivischer Darstellung aus dem Blickwinkel von der Fördereinrichtung
- Figur 3: zeigt einen Stauschalter in perspektivischer Darstellung aus dem Blickwinkel in Richtung der Fördereinrichtung
- Figur 4: zeigt eine Seitenansicht auf einen an ein Geländer montierten Stauschalter
- Figur 5: zeigt eine Seitenansicht auf eine Lasche
- Figur 6: zeigt eine Lasche in perspektivischer Darstellung
- Figur 7: zeigt einen auf ein Geländer montierten Stauschalter im Schnitt A-A (Fig. 4)
- Figur 8: zeigt eine Lasche in Schnittdarstellung
- Figur 9: zeigt eine Halterung für einen Stauschalter

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

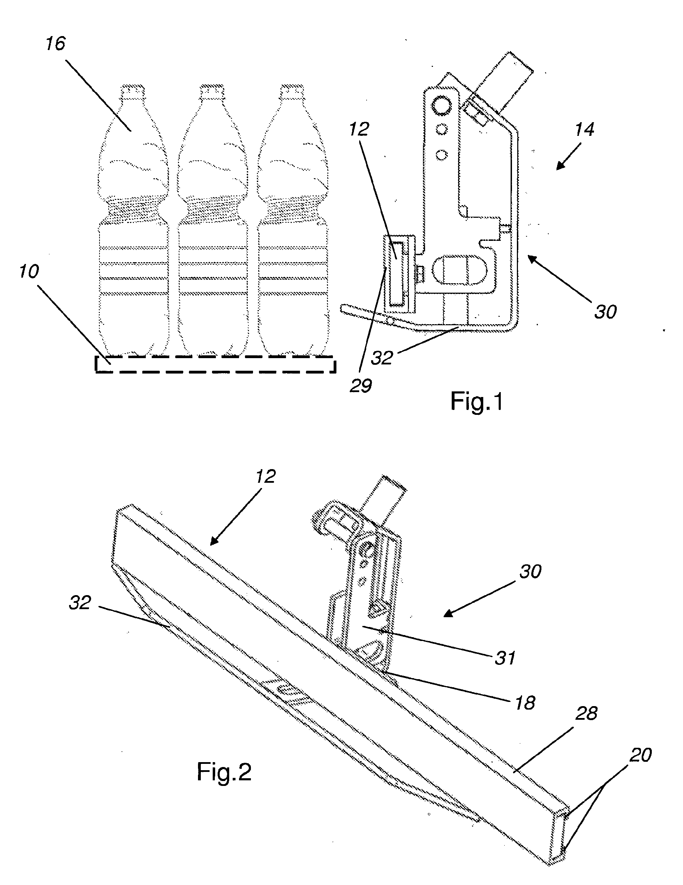

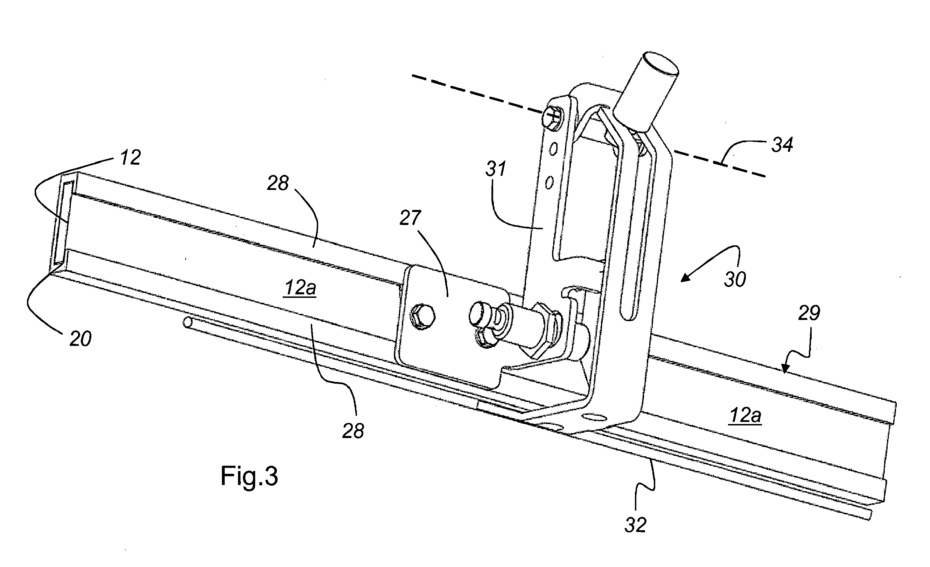

**Figur 1** zeigt eine Fördereinrichtung zum Fördern von Gegenständen, insbesondere von Getränkebehältern in einer Prinzipansicht. Dabei werden Getränkebehälter 16 auf wenigstens einem Förderband 10 gefördert. Die Getränkebehälter 16 werden gegen Herabfallen durch ein Geländer 12 gesichert. Auf dem Geländer 12 ist zum Schutz der Getränkebehälter 16 vor Verschleiß ein Profil 29 aufgesetzt, das beispielsweise als Kunststoffüberzug ausgeführt ist, wobei das Profil 29 das Geländer 12 an der dem Förderband 10 abgewandten Seite 12a umgreift. Das Profil 29 bildet somit auf der dem Förderband 10 abgewandten Seite 12a des Geländers 12 zwei voneinander beabstandete Profilstreifen-Enden 28 (siehe Figur 3) aus.

Während des Förderns ist es erforderlich, mit Hilfe verschiedener Sensoreinrichtungen 14 Informationen über den Zustand der geförderten Gegenstände oder den Status des Fördervorgangs selbst zu ermitteln. Hierzu werden entlang der Fördereinrichtung Sensoreinrichtungen 14 vorgesehen. In Fig. 1 ist die Sensoreinrichtung 14 als Stauschalter 30 ausgeführt, der an dem Geländer 12 befestigt ist. Mit dem Stauschalter 30 kann der Staudruck erfasst werden bzw. ein Signal ausgegeben werden, wenn beispielsweise ein Bügel 32 des Stauschalters 30 nach außen gedrückt und dann induktiv ein Signal erzeugt wird. Dieses Signal kann dann zur entsprechenden Steuerung oder Regelung der Anlage verwendet werden.

**Figur 2** zeigt in einer perspektivischen Darstellung den Stauschalter 30. Der Stauschalter 30 ist erfindungsgemäß lösbar an dem Geländer 12 angebracht. Der bewegliche Bügel 32 greift dabei unter dem Geländer 12 hindurch. Zur lösbaren Befestigung des Stauschalters 30 an dem Geländer 12 ist in einer ersten Ausführungsform der Erfindung ein Permanentmagnet 18 vorgesehen, der an einer Stauschalterhalterung 31 fixiert vorgesehen wird. Damit lässt sich eine für die Zwecke der Sensorik hinreichend feste, jedoch wieder lösbare Verbindung des Stauschalters 30 an dem Geländer 12 herstellen. So kann auf einfache Weise der Stauschalter 30 an dem Geländer 12 beliebig positioniert und fixiert werden, wobei es gleichzeitig möglich bleibt, diese Position auf einfache Weise wieder zu verändern.

Um die Haltekraft des Permanentmagneten 18 zu erhöhen, können ein oder mehrere ferromagnetische Streifen in eine Führungsnut 20 hinter den Profilstreifen-Enden 28, die das Geländer 12 umgreifen und auf der dem Förderband 10 abgewandten Seite 12a des Geländers 12 angeordnet sind, eingefügt werden. Damit wird es möglich, die magnetische Haltekraft auch dann zu verbessern, wenn als Material für das Geländer 12 Edelstahllegierungen verwendet werden.

Eine weitere Ausführungsform der Erfindung ist perspektivisch in **Figur 3** dargestellt. Dabei weist der Stauschalter 30 eine Halterung 31 auf, die ggf. über ein Verbindungselement 27 mit dem Geländer 12 verbunden werden kann. Das Verbindungselement 27 kann beispielsweise als Platte oder Streifen ausgeführt werden. Die Halterung 31 des Stauschalters 30 definiert eine Achse 34, um die ein Bügel 32 des Stauschalters 30 schwenkbar ist. Ist der Staudruck der auf den Förderband 10 transportierten Artikel zu groß, schwenkt der Bügel 32 um die Achse 34. Ein entsprechendes Signal wird an die Maschinensteuerung (nicht dargestellt) ausgegeben.

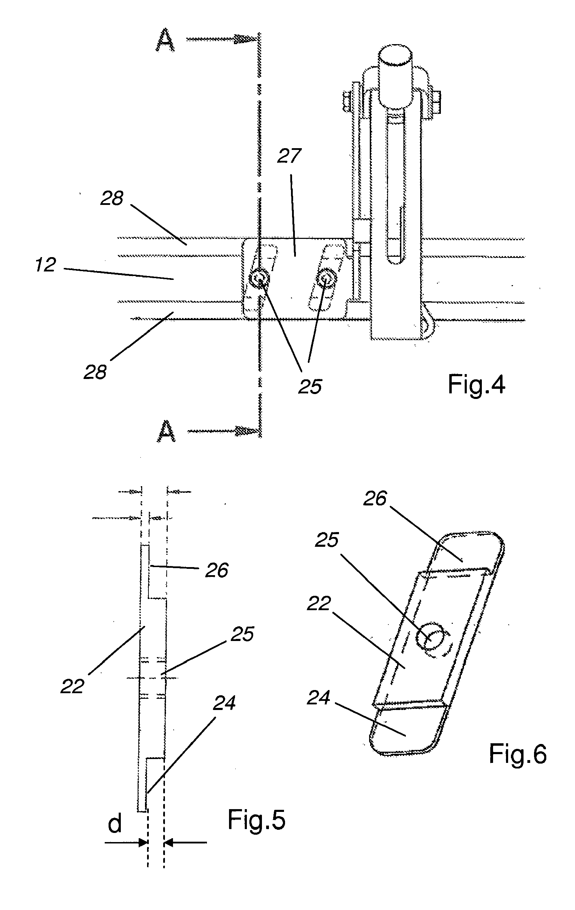

Erfindungsgemäß wird die Halterung 31 in dieser Ausführungsform ggf. über ein Verbindungselement 27, mit wenigstens einer Lasche 22 (Fig. 5, 6) verbunden, beispielsweise verschraubt. Die Lasche 22 ist in der perspektivischen Darstellung der Fig. 3 durch das Verbindungselement 27 verdeckt, jedoch ist sie am Geländer 12 geklemmt angebracht. Hierzu kann die Lasche 22 beispielsweise mit ihren Enden unter die Profilstreifen-Enden 28 geklemmt werden. So entsteht eine lösbare Verbindung zum Geländer 12, die durch die Verbindung der Halterung 31 mit der Lasche 22 fixiert wird.

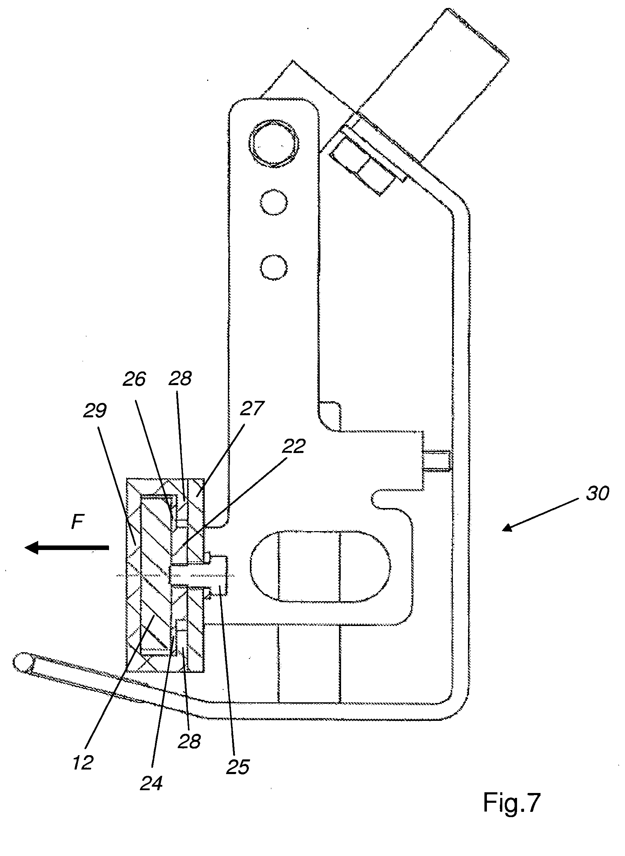

In einer Schnittdarstellung durch das Geländer 12 ist diese Art der lösbaren Befestigung in **Figur 7** dargestellt. Das Geländer 12 ist mit einem Verschleißschutz 29, etwa einem Kunststoffüberzug überzogen, der auf der dem Stauschalter 30 zugewandten Seite zwei Profilstreifen-Enden 28 ausbildet. Unter den Profilstreifen-Enden 28 ist die Lasche 22 (Fig. 6) geklemmt, wobei die unter den Profilstreifen-Enden 28 angeordneten Bereiche 24, 26 der Lasche 22 abgestuft ausgebildet sind. Mit Hilfe der Schraube 25 kann das Verbindungselement 27 in Richtung der Kraft F gegen die Lasche 22 gedrückt werden, so dass eine stabile, jedoch lösbare Verbindung des Stauschalters 30 mit dem Geländer 12 ausgebildet wird. Durch das Lösen der Schraube 25 kann die Verbindung gelöst und der Stauschalter zu einer anderen Stelle bewegt, insbesondere verschoben werden, wo er auf einfache Weise wieder fixiert werden kann.

**Figur 4** zeigt die beschriebene lösbare Verbindung in einer Seitenansicht. Zwei Profilstreifen-Enden 28 umgreifen das Geländer 12 auf seiner, dem Förderband 10 abgewandten Seite. Die Lasche 22 ist, wie bereits beschrieben, unter den Profilstreifen-Enden 28 geklemmt. Mit der Schraube 25 ist das Verbindungselement 27 mit der Lasche 22 verbunden. Das Verbindungselement 27 der Halterung 31 der Sensoreinrichtung 14 ist dabei derart bemessen, dass das Verbindungselement 27 auf den zwei voneinander beabstandeten Profilstreifen-Enden 28 liegt. Dadurch ist verhindert, dass die zum Teil unter die Profilstreifen-Enden 28 geschobenen Laschen 22 beim Befestigen der Halterung 31 herausgezogen werden.

**Figur 5** zeigt eine Ausführungsform der Lasche 22 im Schnitt A-A. Die Lasche 22 weist gestufte Bereiche 24 und 26 auf, die eine geringere Dicke aufweisen als der mittlere Teil der Lasche 22. Damit wird eine einfache Positionierung der Lasche 22 unter den Profilstreifen-Enden 28 ermöglicht. Zudem ist der mittlere Teil der Lasche vielmehr so bemessen, dass die Wandstärke der Profilstreifen-Enden 28 mindestens 2mm dicker, bevorzugt mindestens 1mm dicker und besonders bevorzugt mindestens 0,5mm dicker ist als die Höhe d der gestuften Bereiche 24 und 26 zum Mittelteil der Lasche 22. Dies führt zu einer gezielten Klemmung der gestuften Bereiche 24 und 26 der Laschen 22 da die Profilstreifen-Enden 28 durch den aufliegenden Teil des Verbindungselementes 27 und der Befestigung an den Laschen 22 deformiert werden, so dass eine Klemmkraft bewirkt wird.

**Figur 6** zeigt die in den Bereichen 24 und 26 abgestufte Lasche 22 in einer perspektivischen Darstellung. Die Größenverhältnisse der Lasche 22 werden entsprechend der Maße des Geländers 12 so gewählt, dass eine Klemmung der Lasche 22 unter den Profilstreifen-Enden 28 erreicht werden kann. Ebenso wird die Dicke der abgestuften Bereiche 24 und 26 in Abhängigkeit von der Form und der Ausführung der Umschließung des Geländers 12 gewählt.

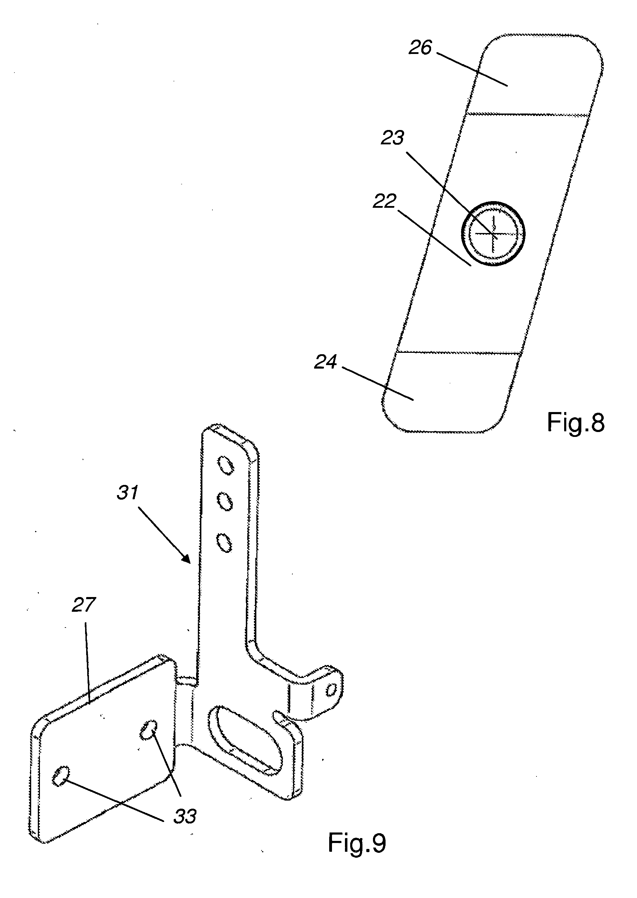

**Figur 8** zeigt eine Version der Lasche 22 in Aufsicht, die trapezförmig ausgeführt ist. Die Lasche 22 weist wiederum zwei abgestufte Bereiche 24 und 26 auf, die dünner sind, als die übrigen Bereiche der Lasche 22. Um die Befestigung der Lasche an dem Verbindungselement 27 zu ermöglichen, ist eine Gewindeausnehmung 23 vorgesehen, in der ein Gewinde vorgesehen ist.

**Figur 9** zeigt eine Ausführungsform einer Stauschalterhalterung 31, an der ein Verbindungselement 27 vorgesehen ist. Das Verbindungselement 27 weist zwei Ausnehmungen 33 auf, durch die Schrauben 25 geführt werden können, mit denen das Verbindungselement 27 an zwei Laschen befestigt werden kann. Durch das Lösen der Schrauben 55 kann die Stauschalterhalterung 31 auf einfache Weise entlang des Geländers 12 verschoben werden. Ist die Stauschalterhalterung 31 zu der vorgeschriebenen Stelle verschoben, müssen lediglich die Schrauben 25 wieder festgezogen werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Fördereinrichtung zum Fördern von Gegenständen, insbesondere zum Fördern von Getränkebehältern (16) mit einem Förderband (10), einem Geländer (12) und einer Sensoreinrichtung (14), die an dem Geländer (12) über eine Halterung (31) lösbar und verschiebbar an dem Geländer (12) angebracht ist, wobei das Geländer (12) mit einem Profil (29) zum Verschleisschutz versehen ist und auf einer dem Förderband (10) abgewandten Seite (12a) des Geländers (12) zwei voneinander beabstandete Profilstreifen-Enden (28) ausbildet, **dadurch gekennzeichnet, dass** die Sensoreinrichtung (14) als Stauschalter (30) mit einem beweglichen Bügel (32) ausgeführt ist, der unter dem Geländer (12) hindurchgreift.

2. Fördereinrichtung nach Anspruch 1, **dadurch gekennzeichnet, dass** die Sensoreinrichtung (14) mit einem Permanentmagneten (18) magnetisch lösbar und verschiebbar angebracht ist.

3. Fördereinrichtung nach einem der Ansprüche 1 oder 2, **dadurch gekennzeichnet, dass** die Sensoreinrichtung (14) an mehreren Laschen (22) lösbar befestigbar ist, wobei die Laschen (22) ferromagnetische Streifen sind, die in einer Führungsnut (20) eingefügt sind, die durch das Geländer (12) und den am Geländer (12) angebrachten Profilstreifen-Enden (28) gebildet ist.

4. Fördereinrichtung nach Anspruch 3, **dadurch gekennzeichnet, dass** die Halterung (31) ein Verbindungselement (27) ausgebildet hat, das magnetisch lösbar mit den am Geländer (12) geklemmten, ferromagnetischen Laschen (22) an dem Geländer (12) befestigt ist.

5. Fördereinrichtung nach Anspruch 1, **dadurch gekennzeichnet, dass** die Halterung (31) der Sensoreinrichtung (14) mechanisch lösbar und verschiebbar angebracht ist.

6. Fördereinrichtung nach Anspruch 5, **dadurch gekennzeichnet, dass** die Sensoreinrichtung (14) an mehreren Laschen (22) lösbar befestigbar ist, wobei die Laschen (22) in einer Führungsnut (20) eingefügt sind, die durch das Geländer (12) und den am Geländer (12) angebrachten Profilstreifen-Enden (28) gebildet ist.

7. Fördereinrichtung nach Anspruch 6, **dadurch gekennzeichnet, dass** die die Halterung (31) ein Verbindungselement (27) ausgebildet hat, das lösbar mit den am Geländer (12) geklemmten Laschen (22) an dem Geländer (12) befestigt ist.

8. Fördereinrichtung nach Anspruch 7, **dadurch gekennzeichnet, dass** das Verbindungselement (27) der Halterung (31) der Sensoreinrichtung (14) mit den Laschen (22) verschraubt ist.

9. Fördereinrichtung nach den Ansprüchen 3 bis 8, **dadurch gekennzeichnet, dass** die Lasche (22) gestuft ausgeführt und so angeordnet ist, dass sie mit den gestuften Teilen (24, 26) unter den am Geländer (12) angebrachten Profilstreifen-Enden (28) angeordnet ist.

10. Fördereinrichtung nach den Ansprüchen 4 bis 9, **dadurch gekennzeichnet, dass** das Verbindungselement (27) der Halterung (31) der Sensoreinrichtung (14) derart bemessen ist, dass das Verbindungselement (27) auf den zwei voneinander beabstandeten Profilstreifen-Enden (28) liegt.

11. Fördereinrichtung nach den Ansprüchen 4 bis 10, **dadurch gekennzeichnet, dass** die Wandstärke der Profilstreifen-Enden (28) mindestens 2mm dicker, bevorzugt mindestens 1mm dicker und besonders bevorzugt mindestens 0,5mm dicker ist als die Höhe d von den gestuften Teilen (24, 26)zum mittleren Teil der Lasche (22)

12. Fördereinrichtung nach Anspruch 1, **dadurch gekennzeichnet, dass** die Halterung (31) des Stauschalters (30) eine Achse (34) definiert, um die der Bügel (32) des Stauschalters (30) schwenkbar ist.

## Claims

1. Conveyor for conveying objects, especially for conveying beverage containers (16) with a conveyor belt (10), a guard rail (12) and a sensor unit (14), which is releasably and movably mounted at the guard rail (12) by a support (31), wherein the guard rail (12) is provided with a profile (29) for wear protection, and on a side (12 a) of the guard rail (12), which is facing away from the conveyor belt (10), forms two profile strip ends (28), which are spaced apart from one another,
**characterized in that** the sensor unit (14) is realized as a jam switch (30) with a movable bracket (32), which reaches through under the guard rail (12).

2. Conveyor according to claim 1,
**characterized in that** the sensor unit (14) is mounted with a permanent magnet (18) in a magnetically releasable and movable manner.

3. Conveyor according to any of the claims 1 or 2,
**characterized in that** the sensor unit (14) is releasably mounted to multiple flaps or plates (22), wherein the flaps or plates (22) are ferromagnetic strips, which are inserted into a guide groove (20), which is formed by the guard rail (12) and the profile strip ends (28) attached to the guard rail (12).

4. Conveyor according to claim 3,
**characterized in that** the support (31) has formed a connection element (27), which is attached to the guard rail (12) in a magnetically releasable manner with the ferromagnetic flaps or plates (22), which are clamped to the guard rail (12).

5. Conveyor according to claim 1,
**characterized in that** the support (31) of the sensor unit (14) is mounted in a mechanically releasable and movable manner.

6. Conveyor according to claim 5,
**characterized in that** the sensor unit (14) is releasably mounted to multiple flaps or plates (22), wherein the flaps or plates (22) are inserted into a guide groove (20), which is formed by the guard rail (12) and the profile strip ends (28) attached to the guard rail (12).

7. Conveyor according to claim 6,
**characterized in that** the support (31) has formed a connection element (27), which is releasably attached to the guard rail (12) with the flaps or plates (22), which are clamped to the guard rail (12).

8. Conveyor according to claim 7,
**characterized in that** the connection element (27) of the support (31) of the sensor unit (14) is screwed to the flaps or plates (22).

9. Conveyor according to any of the claims 3 to 8,
**characterized in that** the flap or plate (22) is realized in a step-like manner and arranged in such a way that it is, together with the step-like parts (24, 26), arranged under the profile strip ends (28), which are mounted at the guard rail (12).

10. Conveyor according to any of the claims 4 to 9,
**characterized in that** the connection element (27) of the support (31) of the sensor unit (14) is of such dimensions that the connection element (27) sits on top of the two profile strip ends (28), which are spaced apart from one another.

11. Conveyor according to any of the claims 4 to 10,
**characterized in that** the wall thickness of the profile strip ends (28) is at least 2 mm thicker, preferrably at least 1 mm thicker and especially preferred at least 0.5 mm thicker than the height *d* from the step-like parts (24, 26) to the middle part of the flap or plate (22).

12. Conveyor according to claim 1,
**characterized in that** the support (31) of the jam switch (30) defines an axis (34), around which the bracket (32) of the jam switch (30) is pivotable.

## Revendications

1. Convoyeur pour convoyer des objets, notamment pour convoyer des récipients à boisson (16), avec une bande de convoyage (10), une rambarde (12) et un dispositif de capteurs (14) qui est fixé sur la rambarde (12) grâce à un support (31) de manière à pouvoir être détaché et déplacé sur la rambarde (12), la rambarde (12) étant pourvue d'un profil (29) qui sert de protection contre l'usure et formant sur un côté (12a) de la rambarde (12) détourné de la bande de convoyage (10) deux extrémités de bandes de profil (28) éloignées l'une de l'autre,
caractérisé en cela que le dispositif de capteurs (14) est exécuté en tant qu'interrupteur de bourrage (30) avec un arceau mobile (32) qui passe sous la rambarde (12).

2. Convoyeur selon la revendication 1 caractérisé en cela que le dispositif de capteurs (14) est fixé par un aimant permanent (18) de sorte à pouvoir être détaché et déplacé magnétiquement.

3. Convoyeur selon l'une des revendications 1 ou 2 caractérisé en cela que le dispositif de capteurs (14) est fixé sur plusieurs languettes (22) de sorte à pouvoir être détaché, les languettes (22) étant des bandes ferromagnétiques qui sont insérées dans une fente de guidage (20) qui est formée par la rambarde (12) et les extrémités de bandes de profil (28) installées sur la rambarde (12).

4. Convoyeur selon la revendication 3 caractérisé en cela que le support (31) a formé un élément de liaison (27) qui est fixé sur la rambarde (12) par les languettes (22) ferromagnétiques collées sur la rambarde (12) de manière à pouvoir être détaché magnétiquement.

5. Convoyeur selon la revendication 1 caractérisé en cela que le support (31) du dispositif de capteurs (14) est fixé de manière à pouvoir être détaché et déplacé mécaniquement.

6. Convoyeur selon la revendication 5 caractérisé en cela que le dispositif de capteurs (14) peut être fixé de sorte à pouvoir être détaché sur plusieurs languettes (22), les languettes (22) étant insérées dans une fente de guidage (20) qui est formée par la rambarde (12) et les extrémités de bandes de profil (28) installées sur la rambarde (12).

7. Convoyeur selon la revendication 6 caractérisé en cela que le support (31) a formé un élément de liaison (27) qui est fixé à la rambarde (12) par les languettes (22) pincées sur la rambarde (12) de manière à pouvoir être détaché.

8. Convoyeur selon la revendication 7 caractérisé en cela que l'élément de liaison (27) du support (31) du dispositif de capteurs (14) est vissé aux languettes (22).

9. Convoyeur selon l'une des revendications 3 à 8 caractérisé en cela que la languette (22) est exécutée et disposée de manière échelonnée de sorte à ce qu'elle soit disposée avec les pièces échelonnées (24, 26) sous les extrémités de bandes de profil (28) fixées à la rambarde (12).

10. Convoyeur selon l'une des revendications 4 à 9 caractérisé en cela que l'élément de liaison (27) du support (31) du dispositif de capteurs (14) est dimensionné de sorte à ce que l'élément de liaison (27) repose sur les deux extrémités de bandes de profil (28) éloignées l'une de l'autre.

11. Convoyeur selon l'une des revendications 4 à 10 caractérisé en cela que l'épaisseur de paroi des extrémités de bandes de profil (28) sont au moins 2 mm plus épaisses, de préférence au moins 1 mm plus épaisses et encore mieux au moins 0,5 mm plus épaisses que la hauteur d des pièces échelonnées (24, 26) sur la partie médiane de la languette (22).

12. Convoyeur selon la revendication 1 caractérisé en cela que le support (31) de l'interrupteur de bourrage (30) définit un axe (34) autour duquel l'arceau (32) de l'interrupteur de bourrage (30) peut être basculé.
